# DEMANDE DE BREVET EUROPEEN

(11) **EP 1 000 839 A1**
(43) Date de publication de la demande: **17.05.2000**
(21) Numéro de dépôt: 99460060.9
(22) Date de dépôt: 30.09.1999
(51) Int. Cl.: B62D 21/20

(54) **Châssis autoporteur pour la fabrication d'une (semi)--remorque et procédé de fabrication d'une telle (semi-)remorque**

(30) Priorité: 30.09.1998 FR 9812413
(71) Demandeur: Turmel, Richard, 41000 Blois (FR)
(72) Inventeur: Turmel, Richard, 41000 Blois (FR)
(74) Mandataire: Vidon, Patrice

(57) **Abrégé**

L'invention concerne un châssis autoporteur pour la fabrication d'une remorque ou d'une semi-remorque caractérisé en ce qu'il est constitué d'une structure (1) autoporteuse continue monobloc nue munie de moyens (2) permettant de rapporter sur celle-ci au moins un train roulant (3) et au moins un élément (4, 5,6) d'équipement de ladite semi-remorque. L'invention concerne aussi un procédé de fabrication de remorque ou semi-remorques à l'aide d'un tel châssis.

## Description

L'invention concerne le domaine de la conception et de la réalisation des remorques de véhicules, tels que principalement des camions, pouvant se présenter sous la forme de remorques simples ou bien sous la forme de semi-remorques, c'est-à-dire de remorques dont la partie antérieure, sans roues, s'adapte au dispositif de traction du camion.

Les remorques et semi-remorques de l'état de la technique présentent une conception très classique, mettant en oeuvre un châssis, formé de longerons et de traverses, coopérant avec une plaque d'attelage fixée au châssis, le train roulant étant fixé sous les longerons.

En fonction de l'utilisation qui est faite de la remorque ou semi-remorque présentant ce type de châssis, celui-ci est pourvu de différents éléments d'équipement.

Sur les véhicules dits secs (bâchés ou sous forme de fourgons), le châssis est muni d'un plancher généralement en bois, fixé sur les longerons. Le châssis en lui-même est réalisé en acier ou en un matériau permettant d'augmenter la charge utile tel que l'aluminium.

Les véhicules sous température dirigée, présente quant à eux un plancher généralement en contre plaqué doublé de mousse polyuréthane et d'un "gelcoat" présentant des propriétés isothermiques.

On comprend donc que, suivant le type de véhicule équipés par les remorques ou les semi-remorques de l'état de la technique, on observe de grandes disparités d'équipements présents sur leur châssis.

De plus, non seulement ces éléments d'équipement peuvent être différents d'une remorque à l'autre mais pour deux remorques présentant le même type d'éléments d'équipement, ceux-ci peuvent être positionnés différemment.

En conséquence, à chaque type de remorque ou de semi-remorque correspond un châssis particulier et donc une fabrication particulière.

Le principal objectif de la présente invention est de proposer un châssis unique pour la réalisation de remorques ou de semi-remorques destinées tant à l'usage des véhicules secs qu'à l'usage des véhicules sous température dirigée tels que les véhicules frigorifiques.

Un autre objectif de la présente invention est de présenter un tel châssis qui montre un plancher auto-porteur. On rappelle à ce sujet que, dans l'état de la technique, les planchers qui sont fixés sur l'ensemble soudé constitué par les longerons et les traverses ne sont pas auto-porteurs. Un objectif de la présente invention est donc de proposer un tel châssis qui soit suffisamment rigide pour rapporter la charge directement dessus, sans avoir à utiliser un plancher supplémentaire.

Encore un autre objectif de la présente invention est de divulguer un procédé de fabrication de remorques ou de semi-remorques impliquant des coûts plus faibles que ceux résultant des procédés de fabrication de l'art antérieur.

Ces différents objectifs sont atteints grâce à l'invention qui concerne un châssis autoporteur pour la fabrication d'une remorque ou semi-remorque caractérisé en ce qu'il est constitué d'une structure autoporteuse continue monobloc nue munie de moyens permettant de rapporter sur celle-ci au moins un train roulant et au moins un élément d'équipement de ladite remorque ou semi-remorque.

L'invention propose donc une structure autoporteuse de base pour la réalisation d'un châssis autoporteur d'une remorque ou d'une semi-remorque, à laquelle on peut fixer un ou plusieurs trains roulants (généralement deux trains roulants dans le cadre d'une remorque et un seul train roulant dans le cadre d'une semi-remorque) et un ou plusieurs éléments d'équipement (attelage, pare-choc, béquille etc...). Une telle structure constitue un modèle de base pour la réalisation des châssis en question sur lesquels. en fonction de l'utilisation du véhicule qu' il équipera, on peut prévoir des éléments d'équipement dédiés à cette utilisation.

Selon une variante préférentielle de l'invention, la structure autoporteuse continue mono-bloc nue de base selon l'invention présente une forme lui permettant d'être empilée. On comprendra qu'une telle caractéristique se révèle particulièrement avantageuse pour stocker et transporter une telle structure, notamment vers une destination où elle sera utilisée pour la réalisation de remorques ou semi-remorques, les éléments d'équipement et les trains roulants pouvant être acheminés séparément de ces structures. Une telle caractéristique permet de diminuer considérablement les coûts de transport.

Selon une autre variante intéressante de l'invention, lesdits moyens permettant de rapporter un train roulant et des éléments d'équipement sur ladite structure autoporteuse continue monobloc nue comprennent des perçages non traversant susceptibles d'accueillir des moyens de fixation desdits équipements et dudit train roulant.

En fonction de la nature des éléments d'équipement que l'on souhaitera fixer à la structure de base, ces perçages pourront notamment être conçus pour autoriser une fixation par rivetage ou par boulonnage de ces éléments. Le train roulant sera quant à lui généralement toujours boulonné.

Encore selon une autre variante préférentielle de l'invention, ladite structure autoporteuse monobloc nue est constituée par une structure alvéolaire métallique à laquelle sont solidarisées au moins un parement supérieur et au moins parement inférieur, lesdits parements pouvant être réalisés en matériau métallique ou encore en résine synthétique et pouvant être doublés par un matériau "multiréflecteur" (par exemple alternance de couches de tissu métallisé et de mousse) notamment lorsque la remorque ou la semi-remorque sera utilisée sur un véhicule frigorifique.

Une telle structure alvéolaire métallique coopérant avec de telles parements permet d'obtenir une structure autoporteuse très rigide mais pourtant légère. On pourra notamment utiliser de l'aluminium pour la réalisation d'une telle structure alvéolaire. De plus, une telle structure permet de réaliser le corps du châssis d'une seule pièce, ce qui simplifie sa fabrication par rapport à celle d'une structure longerons/traverses.

On pourra envisager de réaliser la structure alvéolaire métallique en question sous différentes formes. Toutefois, une forme préférentielle de structure alvéolaire est la forme en nid d'abeilles. Cette structure alvéolaire pourra également contenir une mousse isolante, telle que par exemple du polyuréthane ou du polystyrène expansé, pour la réalisation de remorques ou de semi-remorques de véhicules frigorifiques.

Préférentiellement, lesdits perçages non traversant sont formés dans des inserts prévus dans la structure alvéolaire métallique.

L'invention concerne également un procédé de fabrication en série d'une remorque ou semi-remorque présentant un châssis tel que décrit ci-dessus caractérisé en ce qu'il comprend les étapes consistant à :
- fabriquer une série de châssis autoporteurs se présentant chacun sous la forme identique d'une structure autoporteuse continue monobloc nue munie de moyens permettant de rapporter sur celle-ci au moins un train roulant et au moins un élément d'équipement de la remorque ou semi-remorque;
- fabriquer des éléments d'équipement destinés à être rapportés sur lesdites structure autoporteuse continue monobloc nue ;
- stocker et/ou expédier lesdits châssis sous forme d'au moins un empilement desdites structures nues;
- assembler le train roulant et lesdits éléments d'équipement sur un lieu d'assemblage sur une structure nue pour constituer chaque remorque ou semi-remorque selon une configuration d'assemblage choisie par une pluralité possible.

Grâce à un tel procédé, il devient très facile de transporter les structures modulaires de base constituées par les structures autoporteuses continues monoblocs en vue d'un assemblage sur site. En effet, ces structures de base peuvent être empilées et occuper beaucoup moins de place lors du transport que des châssis déjà équipés de tous leurs éléments d'équipement ainsi que de leurs trains roulants et, a fortiori, que des remorques ou semi-remorques complètes.

Par ailleurs on notera que, grâce aux moyens prévus pour rapporter les éléments d'équipement et les trains roulants décrits ci-dessus, il n'y a plus besoin de soudage ni d'outillages particulier, tels que des éléments de triangulation, pour équiper le châssis. Dans l'art antérieur, le train roulant nécessite pour être monté l'utilisation de deux fers plats ainsi que deux I latéraux de rigidification.

Selon une variante particulièrement intéressante du procédé, ladite étape d'assemblage consiste à fixer sur ladite structure nue par vissage ou par rivetage ledit train roulant et lesdits éléments d'équipement de la remorque ou semi-remorque dans des perçages non-traversant réalisés en une série d'emplacement prédéterminés de ladite structure nue.

Egalement selon une variante particulièrement intéressante de l'invention, lesdits éléments d'équipement appartiennent à un ensemble d'équipement possibles, chaque structure nue étant muni de moyens permettant l'assemblage simultané ou substitutif l'un à l'autre de tous lesdits éléments d'équipement possibles. L'assemblage final de chaque châssis s'effectue sélectivement avec seulement une partie desdits éléments d'équipement, en fonction d'un choix d'un client final.

Une telle caractéristique permet d'équiper la structure de base avec un nombre quelconque d'éléments d'équipement, positionnés en des emplacements de celle-ci pouvant varier.

L'invention, ainsi que les différents avantages qu'elle présente seront plus facilement compris grâce à la description qui va suivre d'un mode non limitatif de réalisation de celle-ci, en référence aux dessins dans lesquels :
- la figure 1 représente une vue de dessus d'une structure de base d'un châssis selon la présente invention ;
- la figure 2 représente une vue en coupe de la structure montrée à la figure 1 ainsi que d'éléments d'équipement et un train roulant destinés à être fixés sur celle-ci ;
- la figure 3 représente une vue en coupe agrandie d'une partie de la structure de base.

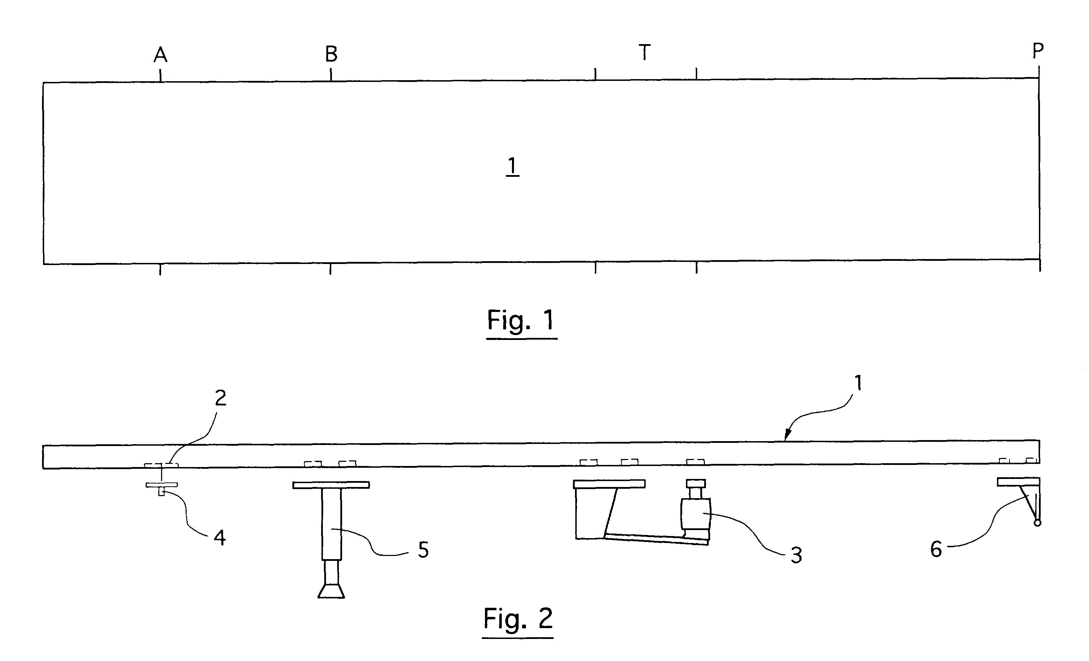

En référence à la figure 1, un châssis selon la présente invention est représenté vu de dessus.

Ce châssis est constitué par une structure 1 autoporteuse réalisée en une seule pièce, c'est-à-dire monobloc et constituant une structure de base apte à coopérer avec différents éléments d'équipement ainsi qu'avec un train roulant.

On a représenté sur cette figure 1, les zones de positionnement de ce train roulant et de ces différents équipements :
- la zone A correspond à la zone de positionnement de l'axe d'attelage destiné à coopérer avec l'attelage d'un camion ;
- la zone B correspond à la zone de positionnement de béquilles ;
- la zone T correspond à la zone de positionnement du train roulant ;
- la zone P correspond à la zone de positionnement du pare-chocs arrière.

Un tel châssis permet la fabrication facilitée d'une semi-remorque.

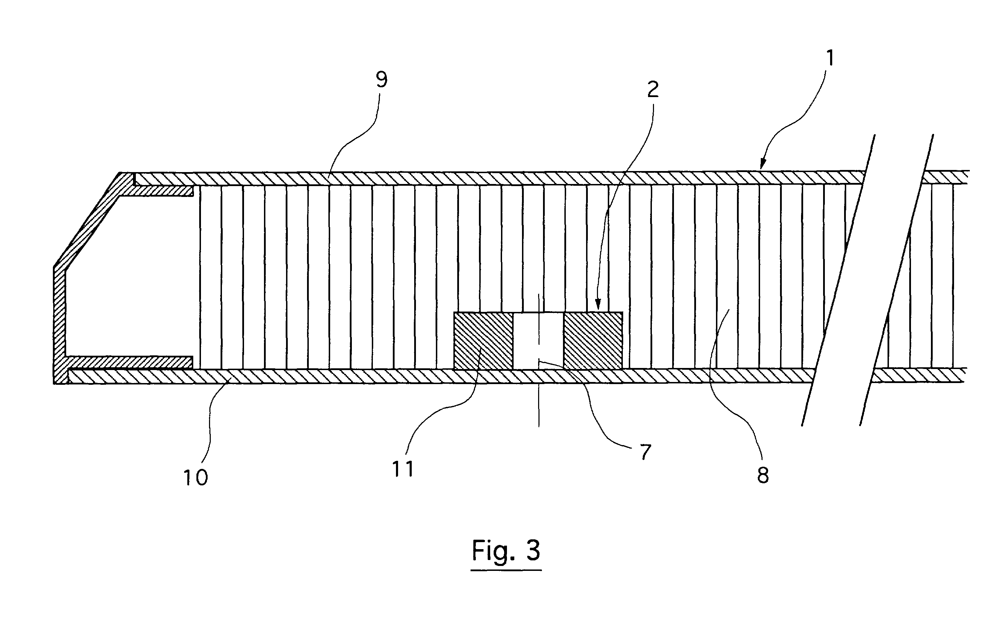

Conformément à l'invention, la structure de base monobloc est pourvue de moyens 2 permettant de rapporter sur celle-ci le train roulant et les éléments d'équipement mentionnés ci-dessus. Ces différents moyens sont prévus sur la face inférieure de la structure 1. Ils sont représentés en lignes pointillés sur la figure 2 et décrits plus en détail en référence à la figure 3.

Grâce à la structure très simple de la structure de base 1, il est possible d'empiler très facilement de telles structures les unes sur les autres et ainsi de réduire considérablement les coûts de transport des châssis de remorques ou semi-remorques. En effet, les différents éléments d'équipement et le train roulant (ou les trains roulants) peuvent être transportés séparément et montés facilement sur site.

Dans le mode de réalisation représenté, la structure de base est équipée d'un axe d'attelage 4, de béquilles 5, d'un pare-chocs arrière 6 et bien sûr d'un train roulant 3. Chacun de ces éléments ainsi que le train roulant sont fixés à la structure de base 1 monobloc grâce aux moyens 2 prévus à cet effet. Plus précisément, le pare-chocs 6 peut être riveté sur la structure 1 tandis que le train arrière 3, les béquilles 5 et l'axe d'attelage 4 peuvent être boulonnés sur celle-ci.

Comme mentionné dans la description ci-dessus, on pourra prévoir des moyens 2 permettant de rapporter les éléments d'équipement et le train roulant en différentes zones de la structure de base monobloc 1 sous une forme standard permettant de réaliser tant des remorques ou semi-remorques destinées à des véhicules secs qu'à des véhicules sous température contrôlée.

En référence à la figure 3, la structure de l'élément de base ainsi que celle des moyens 2 utilisés pour rapporter des éléments d'équipement et de train roulant sont représentées plus en détails.

La structure de base 1 est ainsi constituée d'une structure interne alvéolaire 8 en nid d'abeilles réalisée en aluminium et pourvue sur sa face supérieur d'un parement supérieur 9 et sur sa face inférieur d'un parement inférieur 10 également en acier. Une telle structure en nid d'abeilles recouverte sur chacune de ses faces d'une tôle d'acier permet de conférer à la structure de base 1 une grande rigidité. De plus, la structure alvéolaire interne étant réalisée en aluminium, le châssis obtenu est léger.

Les moyens 2 permettant d'accueillir les différents éléments d'équipement (axe d'attelage 4, béquilles 5, pare-chocs 6) et le train roulant 3 sont constitués par des perçages 7 formés dans des inserts 11.

L'invention permet de simplifier considérablement la fabrication, le transport, le stockage des châssis de remorques et de semi-remorques tout en diminuant leur coût grâce à l'utilisation d'une structure de base qui peut être aménagée en fonction des besoins, de façon à obtenir différents types de remorques et semi-remorques pouvant être utilisés dans un nombre très varié de domaines.

Le mode de réalisation de l'invention ici décrit n'a pas pour objet de réduire la portée de celle-ci. En conséquence, il pourrait y être apportées de nombreuses modifications sans sortir de son cadre. Notamment, on notera que les moyens permettant de rapporter les éléments d'équipement et de train roulant pourront être prévus dans des zones autres que les zones A, B, T, P indiquées. Le nombre de ces moyens pourra également être différent ainsi que le nombre et la position des éléments d'équipement et du train roulant.

## Revendications

1. Châssis autoporteur pour la fabrication d'une remorque ou semi-remorque caractérisé en ce qu'il est constitué d'une structure (1) autoporteuse continue monobloc nue munie de moyens (2) permettant de rapporter sur celle-ci au moins un train roulant (3) et au moins un élément (4, 5,6) d'équipement de ladite remorque ou semi-remorque.

2. Châssis autoporteur selon la revendication 1 caractérisé en ce que ladite structure (1) autoporteuse continue monobloc nue est empilable.

3. Châssis autoporteur selon l'une quelconque des revendications 1 ou 2 caractérisé en ce que lesdits moyens (2) permettant de rapporter un train roulant (3) et des éléments d'équipement (4,5,6) sur ladite structure (1) autoporteuse continue monobloc nue comprennent des perçages (7) non traversant susceptibles d'accueillir des moyens de fixation desdits équipements (4,5,6) et dudit train roulant (3).

4. Châssis autoporteur selon l'une quelconque des revendications 1 à 3 caractérisé en ce que ladite structure (1) autoporteuse monobloc nue est constituée par une structure alvéolaire métallique (8) à laquelle sont solidarisées un parement supérieur (9) et au moins parement inférieur (10), lesdits parements pouvant être en métal et/ou en résine et ladite structure alvéolaire pouvant être au moins partiellement rempli d'une mousse isolante.

5. Châssis autoporteur selon la revendication 4 caractérisé en ce que ladite structure alvéolaire métallique (8) est une structure en nid d'abeille.

6. Châssis selon les revendications 4 et 5, ou 4 et 6, caractérisé en ce que lesdits perçages (7) non traversant sont formés dans des inserts (11) prévus dans la structure alvéolaire métallique (8).

7. Procédé de fabrication en série d'une remorque ou semi-remorque présentant un châssis selon l'une quelconque des revendications 1 à 6 caractérisé en ce qu'il comprend les étapes consistant à :
- fabriquer une série de châssis autoporteurs se présentant chacun sous la forme identique d'une structure (1) autoporteuse continue monobloc nue munie de moyens (2) permettant de rapporter sur celle-ci au moins un train roulant (3) et au moins un élément d'équipement (4,5,6) de la remorque ou semi-remorque;
- fabriquer des éléments d'équipement (4,5,6) destinés à être rapportés sur lesdites structure (1) autoporteuse continue monobloc nue ;
- stocker et/ou expédier lesdits châssis sous forme d'au moins un empilement desdites structures (1) nues;
- assembler le train roulant (3) et lesdits éléments d'équipement (4,5,6) sur un lieu d'assemblage sur une structure nue (1) pour constituer chaque remorque ou semi-remorque selon une configuration d'assemblage choisie parmi une pluralité possible.

8. Procédé selon la revendication 7 caractérisé en ce que ladite étape d'assemblage consiste à fixer sur ladite structure nue (1) par vissage ou par rivetage ledit train roulant (3) et lesdits éléments d'équipement (4,5,6,) de la remorque ou semi-remorque dans des perçages non-traversant réalisés en une série d'emplacement prédéterminés de ladite structure nue (1).

9. Procédé selon l'une quelconque des revendications 7 ou 8 caractérisé en ce que lesdits éléments d'équipement (4,5,6) appartiennent à un ensemble d'équipements possibles, chaque structure nue (1) étant muni de moyens permettant l'assemblage simultané ou substitutif l'un à l'autre de tous lesdits éléments d'équipement possibles et en ce que l'assemblage final de chaque châssis s'effectue sélectivement avec seulement une partie desdits éléments d'équipement, en fonction d'un choix d'un client final.

10. Remorque ou semi-remorque caractérisée en ce qu'elle est constituée de l'assemblage d'un châssis selon l'une des revendications 1 à 6, d'au moins un train roulants (3) et d'éléments d'équipement (4,5,6) rapportés sur ladite structure autoporteuse continue monobloc (1).
